# EUROPEAN PATENT APPLICATION

(11) **EP 2 273 498 A1**
(43) Date of publication of application: **12.01.2011**
(21) Application number: 09305593.7
(22) Date of filing: 24.06.2009
(51) Int. Cl.: G11B 7/007, G11B 7/26, G11B 7/0045, G11B 7/005, G11B 7/09

(54) **Compatible optical recording medium**

(71) Applicant: Thomson Licensing, 92130 Issy-les-Moulineaux (FR)
(72) Inventor: Weckbecker, Meik, 78054 Villingen-Schwenningen (DE); Przygodda, Frank, 78050 Villingen-Schwenningen (DE)
(74) Representative: Schmidt-Uhlig, Thomas

(57) **Abstract**

The present invention relates to a format of a recordable optical recording medium (8), which is designed in such a way that it has the appearance of a read-only optical recording medium for most players and recorders, and to a method for manufacturing the recordable optical recording medium (8).

The optical recording medium (8) has a guide structure having lands (81) and grooves (82), wherein the grooves (82) are provided for recording data, which has pre-pits (83) for addressing during recording that are formed by variations of the width and/or the height of the lands (81). Alternatively, the lands (81) are provided for recording data and the prepits (83) are formed by variations of the width and/or the depth of the grooves (82).

## Description

The present invention relates to a format of a recordable optical recording medium, which has the appearance of a read-only optical recording medium for most players and recorders, and more specifically to a recordable optical recording medium suitable for recording at a wavelength of 405nm and for reading at a wavelength of 650nm.

The distribution of digital data such as movies or software on optical recording media today is established as the main distribution channel. However, this means that stores need to stock a large amount of titles in order to be able to provide most requested titles immediately to their customers without having to order them.

In order to reduce this need for a large stock several solutions for a manufacturing on demand or a distribution via networks have been proposed. The optical recording medium, typically a DVD (digital versatile disk), is recorded as soon as a title is requested by a customer. Recording is done with a special recorder provided in a store, with a kiosk type recording terminal, or by a special consumer recorder connected to a network. These special recorders allow to write data to a recordable DVD in such a way that the DVD has the appearance of a CSS-encrypted DVD-Video (ROM) disk, even though it is a specially finalized recordable DVD. For recording the optical recording medium has a groove structure to guide an optical pickup unit relative to the optical recording medium.

Apart from the above mentioned manufacturing on demand applications, there also exist a plurality of applications for pre-recorded optical recording media having at least some recording capabilities. For example, for serialization and authentication of pre-recorded optical recording media a recordable area is needed on pre-recorded optical recording media. The recordable area is used for adding a unique identifier to the pre-recorded medium after the stamping process at the manufacturing plant. Similarly, information stored on the pre-recorded medium can be used to replace a required software key, such as a serial number, which otherwise has to be input manually with a keyboard when installing the software. The information may also be used as an authentication key to unlock the content stored on the pre-recorded medium.

A further application of recordable areas on a pre-recorded medium is related to the so-called retail activation. According to this application an optical recording medium cannot be played back after manufacturing, e.g. because specific parts of the content are missing. Instead, the medium needs to be activated at the point of sale using a special recorder for making the necessary modifications to the medium, e.g. by adding the missing content.

In order to establish the above described solutions as further distribution channels, the recorded optical recording media have to be compatible with as many standard players and recorders as possible. While this is usually not a problem for standard players, the situation is different with standard recorders.

In the following the term "groove" is used to designate a trench-like feature of an optical recording medium, whereas the land is the area between the grooves. The groove is located nearer to the entrance surface than the land. This definition is used, for example, in Standard ECMA-279: "80 mm (1,23 Gbytes per side) and 120 mm (3,95 Gbytes per side) DVD-Recordable Disk (DVD-R)", where data are recorded in the grooves. It is to be noted, however, that different definitions of "groove" and "land" are found in the literature.

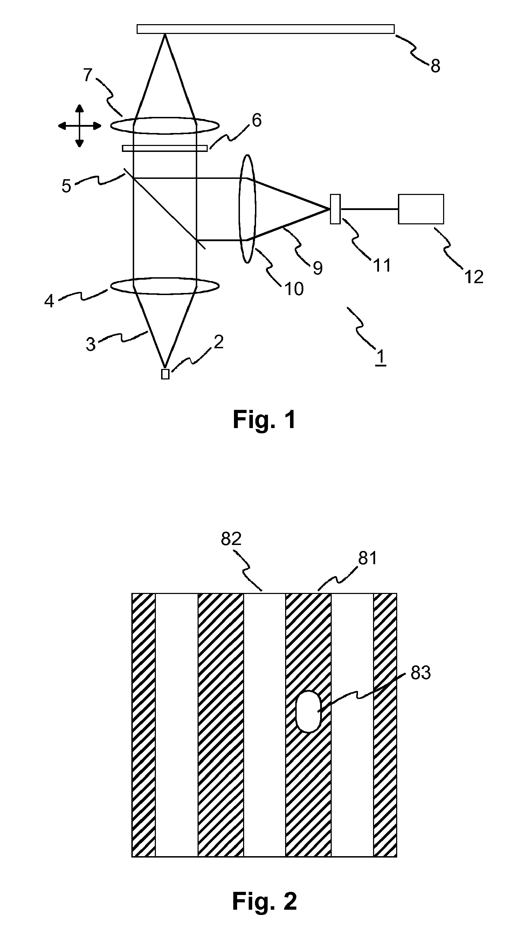

Several methods are known for detecting the position of the light spot on an optical recording medium. The two most popular are Differential-Phase-Detection (DPD, used for read-only (also: ROM) formats) and radial Push-Pull (used for recordable (also: RE) formats). However, those two methods require substrates having embossed features, i.e. pits for ROM formats or a land/groove structure for RE formats. A typical land/groove structure is depicted in Fig. 2. As a copy protection mechanism some optical pickups used in recorders do not allow to retrieve data from an optical recording medium indicated as a read-only medium when a push-pull signal originating from the land/groove structure is found, which is an indication of a recordable optical recording medium. Such incompatibilities have to be avoided.

In order to address this issue, it has been proposed to use a special recordable optical recording medium, which is suitable for recording at a wavelength of 405nm and for reading at a wavelength of 650nm. In order to be playable in a normal DVD player and to be detected as a normal DVD-Rom, the push-pull signal has to be small at the wavelength of 650nm, whereas at the wavelength of 405nm it needs to be high enough to be detected by the recorder.

In this respect, EP 1 933 313 discloses a recordable optical recording medium with a specially designed land/groove structure. The optical recording medium is recorded using a laser with a wavelength around 405 nm, whereas it is read using a laser with a wavelength around 650 nm. The specially designed land/groove structure allows to have a push-pull signal at 405 nm, but to have only a strongly reduced push-pull signal at 650 nm. For this purpose the recordable optical recording medium uses particularly small grooves with a width of less than 120nm in combination with land recording.

In order to enable addressing during recording at the wavelength of 405nm, address information, such as prepits, is preferably provided. However, this address information must not disturb readout at the wavelength of 650nm. The standard prepits for DVD-R recording are placed in the lands. Unfortunately, as data are recorded in the lands, these prepits may disturb the encoding and generate PI-errors (parity inner errors).

Similarly, US 2006/0120263 discloses an optical recording medium having lands and grooves, as well as prepits. According to one embodiment data are recorded in the grooves only. In this embodiment the prepits are formed as discontinuities of the grooves.

It is an object of the invention to propose a further format for a recordable optical recording medium, which has the appearance of a read-only optical recording medium for most players and recorders.

According to a first aspect of the invention, this object is achieved by an optical recording medium with a guide structure having lands and grooves, wherein the grooves are provided for recording data, which has pre-pits for addressing during recording that are formed by variations of the width and/or the height of the lands.

According to a second aspect of the invention, this object is achieved by an optical recording medium with a guide structure having lands and grooves, wherein the lands are provided for recording data, which has pre-pits for addressing during recording that are formed by variations of the width and/or the depth of the grooves.

The invention proposes to place the prepits in the lands in the case of groove recording, and in the grooves in case of land recording. This has the advantage that during readout the prepits have a reduced influence on the retrieved data signal. The variations of the width and/or the height of the lands, or the variations of the width and/or the depth of the grooves, for forming the prepits are adapted such that the prepits are detectable at the recording wavelength of 405nm, but do not disturb data readout at the reading wavelength of 650nm of a standard DVD player.

Preferably, the variations of the width and/or the height of the lands are a reduced width and/or a reduced height. Similarly, the variations of the width and/or the depth of the grooves are a reduced width and/or a reduced depth. Favorably, the reduced width of the lands or grooves is between 60% and 20% of the nominal groove width and the reduced height of the lands or the reduced depth of the grooves is between 60% and 20% of the nominal groove depth. By reducing the width and/or the height of the lands or the width and/or the depth of the grooves it is possible to further reduce the influence of the prepits on the retrieved data signal compared to a simple discontinuity of the land and/or groove. Of course, the variations of the width of the lands or grooves do not need to be symmetric. The prepits may likewise be formed by an asymmetric modification of the width.

Advantageously, the optical recording medium is adapted to be recorded at a first wavelength and the lands or grooves have a width smaller than the diameter of a recording light spot. Preferably, the first wavelength is 405nm and the width of the lands or the width of the grooves is around 200nm. Though an identical width of the lands and the grooves would be optimum for the detection of the push-pull signal and the prepit signal, this would cause a maximum influence of the prepits and the land/groove structure on the retrieved data signal. This influence is reduce when the width of the lands or the width of the grooves is smaller than the diameter of the recording light spot. The width of 200nm is a practical trade-off between the influence on the retrieved data signal at the reading wavelength and the detectability of the push-pull signal and the prepit signal at the recording wavelength.

Favorably, the height of the lands or the depth of the grooves is between 30nm and 50nm. Again, this represents a trade-off between the influence on the retrieved data signal at the reading wavelength and the detectability of the push-pull signal and the prepit signal at the recording wavelength.

The proposed prepits in the form of variations of the width and/or the height of the lands or the width and/or the depth of the groove are easy to master. In the case of prepits located in the grooves, it is sufficient to reduce the power and/or the focus diameter and/or to radially vary the position of the recording beam, which is used for creating the master of the optical recording medium. In the case of prepits located in the lands, the width of the prepits can be controlled by adapting the focus diameter and/or to radially vary the position of the recording beam during mastering of the adjacent grooves. The height can be controlled by illuminating the land area at the desired position of a prepit.

For a better understanding the invention shall now be explained in more detail in the following description with reference to the figures. It is understood that the invention is not limited to this exemplary embodiment and that specified features can also expediently be combined and/or modified without departing from the scope of the present invention as defined in the appended claims. In the figures:
- Fig. 1: schematically shows a pickup for reading from an optical recording medium;
- Fig. 2: shows a land/groove structure of a known recordable optical recording medium;
- Fig. 3: illustrates a further land/groove structure of a known recordable optical recording medium;
- Fig. 4: depicts still a further land/groove structure of a known recordable optical recording medium;
- Fig. 5: shows a first land/groove structure according to the invention;
- Fig. 6: illustrates a second land/groove structure according to the invention;
- Fig. 7: depicts a third land/groove structure according to the invention;
- Fig. 8: shows a fourth land/groove structure according to the invention;
- Fig. 9: illustrates a fifth land/groove structure according to the invention;
- Fig. 10: shows a sixth land/groove structure according to the invention;
- Fig. 11: illustrates a seventh land/groove structure according to the invention;
- Fig. 12: depicts an eighth land/groove structure according to the invention;
- Fig. 13: shows the amplitude of the push-pull signal, the prepit detection signal and the HF detection signal for the structure of Fig. 6 in dependence on the groove depth; and
- Fig. 14: depicts the amplitude of the push-pull signal, the prepit detection signal and the HF detection signal for the structure of Fig. 5 in dependence on the prepit residual width.

In Fig. 1 a pickup 1 for reading from an optical recording medium 8 is shown schematically. A laser diode 2 emits a linearly polarized light beam 3, which is collimated by a collimator lens 4. The collimated light beam 3 passes a polarization beam splitter 5 and a quarter wave plate 6, which transforms the light beam 3 into a circular polarized light beam 3, before it is focused onto an optical recording medium 8 by an objective lens 7. The light beam 9 reflected by the optical recording medium 8 is collimated by the objective lens 7 and passes the quarter wave plate 6, which transforms the reflected light beam 9 into a linear polarized light beam 9. Due to the quarter wave plate 6, the direction of polarization of the reflected light beam 9 is perpendicular to the direction of polarization of the initial light beam 3. The reflected light beam 9 is thus deflected by the polarization beam splitter 5 towards a focusing lens 10, which focuses the reflected light beam 9 onto a detector 11. The detector 11 usually has four detector quadrants A, B, C, D (not shown). An evaluation circuitry 12 evaluates the signals obtained by the detector 11.

Fig. 2 shows a groove/land structure of a known recordable optical recording medium, namely a DVD-R as defined in Standard ECMA-279: "80 mm (1,23 Gbytes per side) and 120 mm (3,95 Gbytes per side) DVD-Recordable Disk (DVD-R)". As can be seen, a plurality of grooves 82 are arranged between the lands 81. The groove/land structure is used for tracking. Located in the lands 81 are distinct prepits 83, which are used for addressing. Data are recorded in the grooves 82. The width of the grooves 82 is essentially identical to the width of the lands 81.

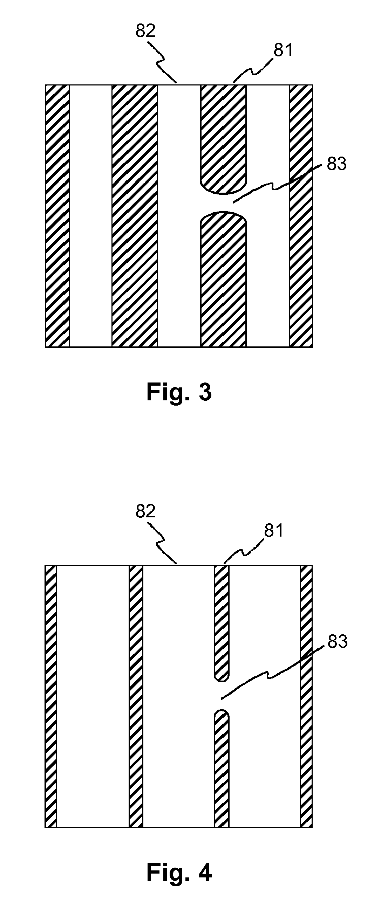

Fig. 3 illustrates a further example of a groove/land structure of a known recordable optical recording medium. In this example the prepits 83 are formed by short discontinuities of the lands 81. Again, data are recorded in the grooves 82, whose width is essentially identical to the width of the lands 81.

Fig. 4 depicts still a further example of a groove/land structure of a known recordable optical recording medium. Again the prepits 83 are formed by short discontinuities of the lands 81. Data are recorded in the grooves 82, but the width of the grooves 82 is much larger than the width of the lands 81.

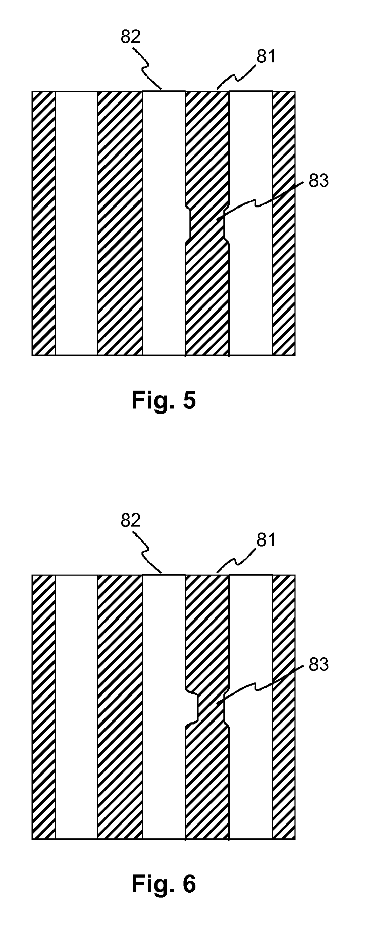

A first land/groove structure according to the invention is schematically illustrated in Fig. 5. Instead of discontinuities of the lands 81, modifications of the width of the lands 81 are used for forming the prepits 83. Also in this case data are recorded in the grooves 82.

A first modification of the land/groove structure of Fig. 5 is depicted in Fig. 6. Similar to Fig. 5 the prepits 83 are realized as modifications of the width of the lands 81. However, in this example the modification is an asymmetric modification of the width of the lands 81.

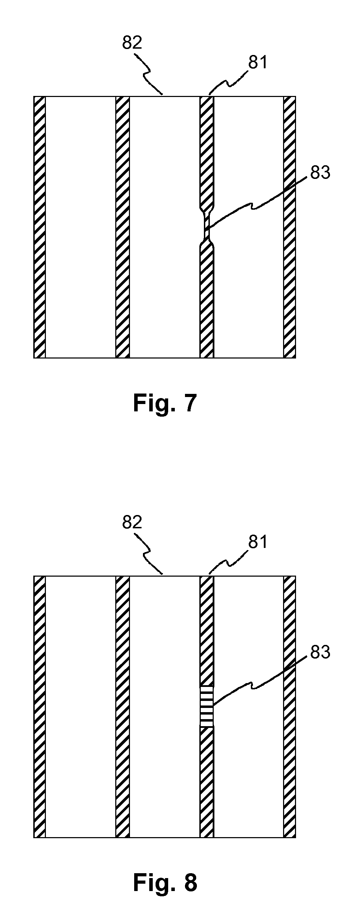

A further modification of the land/groove structure of Fig. 5 is depicted in Fig. 7. Similar to Fig. 5 the prepits 83 are realized as modifications of the width of the lands 81. However, in this example the lands 81 have a particularly small width, e.g. around 200nm, which is only 27% of the track pitch used for DVD-R.

It is likewise possible to use modifications of the height of the lands 81 for forming the prepits 83. Advantageously, a reduced height is used in combination with the particularly small lands 81. The resulting land/groove structure is shown in Fig. 8, where the different height is indicated by a different type of hatching.

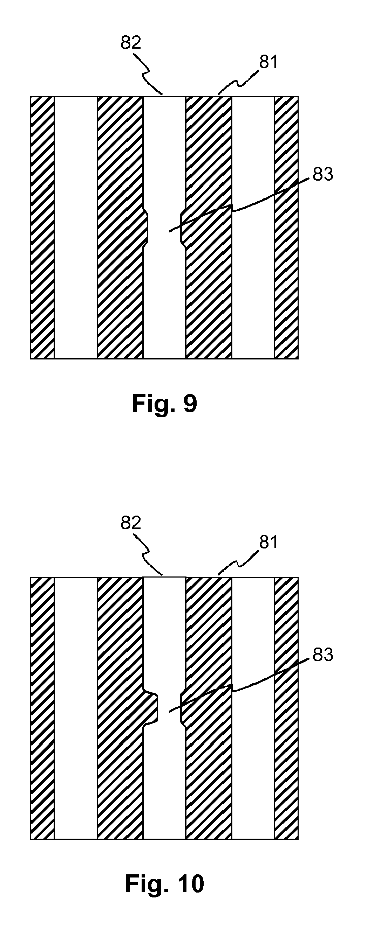

In the embodiments of Figs. 5 to 8 data are recorded in the grooves 82. Of course, it is also possible to adapt the proposed land/groove structures for a recordable optical recording medium suitable for land recording. Exemplary adapted land/groove structures are illustrated in Figs. 9 to 12. In Fig. 9 the prepits 83 are formed by modifications of the width of the grooves 82. Apart from the prepits 83 the width of the grooves 82 is essentially identical to the width of the lands 81.

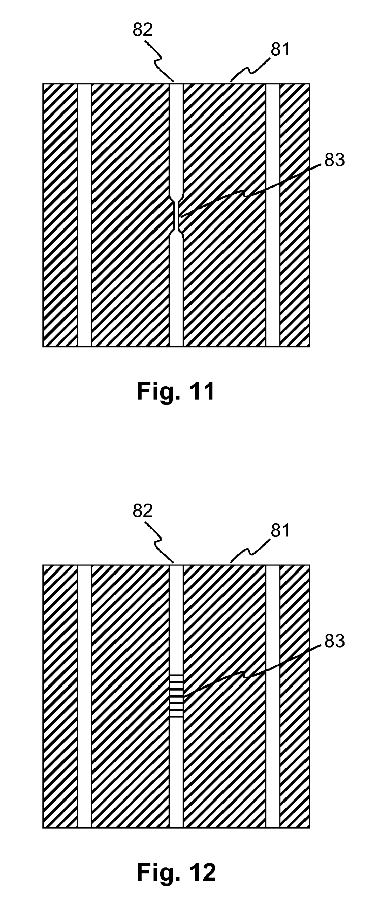

Fig. 10 illustrates a modification of the land/groove structure of Fig. 9 using an asymmetric modification of the width of the grooves 82. A land/groove structure with particularly small grooves 82 is shown in Fig. 11. Again the prepits 83 are formed by modifications of the width of the grooves 82. Finally,
Fig. 12 depicts a land/groove structure using a combination of particularly small grooves 82 and a reduced depth of the grooves 82 for forming the prepits 83, where the different depth is indicated by a different type of hatching.

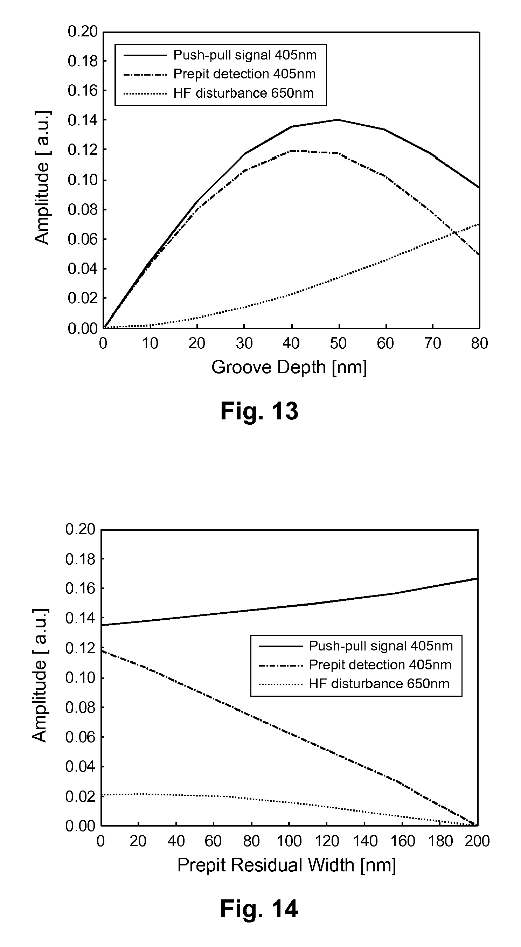

The resulting amplitude of the push-pull signal, the prepit detection signal and the HF detection signal are depicted in Fig. 13 in dependence on the groove depth. The results were obtained for the land/groove structure of Fig. 4. The width of the lands 81 was 200nm, which is only 27% of the track pitch used for DVD-R. Illustrated is the signal amplitude during illumination of a prepit 83. The HF disturbance signal is determined for the specified reading wavelength of 650nm. It is obtained by summing all four detector quadrants (A+B+C+D) of the detector 11. The HF disturbance signal should be as small as possible in order to minimize disturbances caused by the prepits 83 during readout with the specified reading wavelength. The push-pull signal and the prepit detection signal are generated as a signal (A+B)-(C+D) related to the difference in the amount of light in the two halves of the exit pupil of the detector lens. They are determined for the specified recording wavelength of 405nm. In difference to the push-pull signal the prepit detection signal is not low-pass filtered. As can be seen, for a certain depth of the grooves 82 (here about 45nm) the prepit detection signal for detecting the prepits 83 during recording with 405nm becomes maximum.

The amplitude of the push-pull signal, the prepit detection signal and the HF detection signal are depicted in Fig. 14 in dependence on the prepit residual width, i.e. the groove width at the position of a prepit 83. Basis for the results was the land/groove structure of Fig. 7, i.e. the width of the lands 81 was 200nm. The groove depth was 40nm. As is to be expected, the prepit detection signal becomes zero at a prepit residual width of 200nm, when the prepit residual width equals the groove width. As can be seen, by increasing the prepit residual width it becomes possible to reduce the HF disturbance signal at 650nm without loosing the push-pull signal and the prepit detection signal at 405nm.

In the above the invention has been explained with reference to a DVD-like optical recording medium, which is read with a wavelength around 650nm and intended to be written with a wavelength around 405nm. Of course, the general idea of the invention is also applicable to other types of optical recording media and other combinations of reading wavelength and recording wavelength. Examples for such combinations are reading at 780nm/recording at 650nm, reading at 780nm/recording at 405nm, or reading at 405nm/recording at 330-380nm (near UV laser diodes).

Though in the above description in all cases either the width or the height of the lands 81 or the width or the depth of the grooves 82 has been modified for forming the prepits 83, it is likewise possible to modify both the width and the height or depth for forming the prepits 83.

## Claims

1. Optical recording medium (8) with a guide structure having lands (81) and grooves (82), wherein the grooves (82) are provided for recording data, having pre-pits (83) for addressing during recording, **characterized in that** the pre-pits (83) are formed by variations of the width and/or the height of the lands (81).

2. Optical recording medium (8) according to claim 1, **wherein** the variations of the width and/or the height of the lands (81) are a reduced width and/or a reduced height.

3. Optical recording medium (8) according to claim 2, **wherein** the reduced width of the lands (81) is between 60% and 20% of the nominal land width and/or the reduced height of the lands (81) is between 60% and 20% of the nominal land height.

4. Optical recording medium (8) according to one of claims 1 to 3, **wherein** the optical recording medium (8) is adapted to be recorded at a first wavelength and the lands (81) have a width smaller than the diameter of a recording light spot.

5. Optical recording medium (8) according to claim 4, **wherein** the first wavelength is 405nm and the width of the lands (81) is around 200nm.

6. Optical recording medium (8) according to one of claims 1 to 5, **wherein** the height of the lands (81) is between 30nm and 50nm.

7. Optical recording medium (8) with a guide structure having lands (81) and grooves (82), wherein the lands (81) are provided for recording data, having pre-pits (83) for addressing during recording, **characterized in that** the pre-pits (83) are formed by variations of the width and/or the depth of the grooves (82).

8. Optical recording medium (8) according to claim 7, **wherein** the variations of the width and/or the depth of the grooves (82) are a reduced width and/or a reduced depth.

9. Optical recording medium (8) according to claim 8, **wherein** the reduced width of the grooves (82) is between 60% and 20% of the nominal groove width and/or the reduced depth of the grooves (82) is between 60% and 20% of the nominal groove depth.

10. Optical recording medium (8) according to one of claims 7 to 9, **wherein** the optical recording medium (8) is adapted to be recorded at a first wavelength and the grooves (82) have a width smaller than the diameter of a recording light spot.

11. Optical recording medium (8) according to claim 10, **wherein** the first wavelength is 405nm and the width of the grooves (82) is around 200nm.

12. Optical recording medium (8) according to one of claims 6 to 11, **wherein** the depth of the grooves (82) is between 30nm and 50nm.

13. Method for mastering an optical recording medium (8) according to one of claims 1 to 12, **having** the step of adapting the power and/or the focus diameter of a recording beam, and/or the step of radially varying the position of the recording beam during mastering of a groove (82) for forming a prepit (83).

14. Apparatus for mastering an optical recording medium (8) according to one of claims 1 to 12, **characterized in that** it is adapted to perform a method according to claim 13 for mastering an optical recording medium (8).
